# EUROPEAN PATENT SPECIFICATION

(11) **EP 3 359 389 B1**
(45) Date of publication and mention of the grant of the patent: **18.03.2020**
(21) Application number: 16781156.1
(22) Date of filing: 04.10.2016
(51) Int. Cl.: B42D 25/30, B42D 25/23, B42D 25/455, B42D 25/24

(54) **A METHOD FOR MANUFACTURING A SECURITY SHEET AND AN INSERT FOR INCORPORATION INTO A SECURITY SHEET**
VERFAHREN ZUR HERSTELLUNG EINES SICHERHEITSBLATTS UND EINSATZ ZUM EINBAU IN EIN SICHERHEITSBLATT
PROCÉDÉ DE FABRICATION DE FEUILLE DE SÉCURITÉ, ET INSERT À INCORPORER DANS UNE FEUILLE DE SÉCURITÉ

(30) Priority: 05.10.2015 GB 201517559
(43) Date of publication of application: 15.08.2018
(73) Proprietor: De La Rue International Limited, Basingstoke, Hampshire RG22 4BS (GB)
(72) Inventor: SUGDON, Matthew, Basingstoke Hampshire RG22 4BS (GB)
(74) Representative: Boult Wade Tennant LLP
(86) International application number: PCT/GB2016/053083
(87) International publication number: WO 2017/060688

(56) References cited:
- WO-A1-2015/092741
- WO-A1-2015/132574
- AU-B2- 488 652

## Description

The present invention is directed towards a method for manufacturing a security sheet for displaying personal data comprising a plastic substrate. The present invention is further directed towards an insert for incorporation into such a security sheet, a security sheet comprising the insert, a security document comprising the security sheet and a method of manufacturing the insert.

Security documents and booklets, such as passports, passbooks, identification documents, certificates, licences, cheque books and the like, commonly comprise one or more security pages on which information is provided. For example, a passport booklet typically comprises a cover and a plurality of internal visa pages therebetween. Typically the visa pages are made from paper having a grammage of around 85 gsm and are sewn together along a stitch line. The cover is adhered to the outside of the visa pages and thereby protects the stitch line.

At least one security sheet or data page is provided in the booklet and is usually the second or the penultimate page, typically located between one of the visa pages and the cover. The security sheet usually contains personal data and is generally overlaid by a layer of polymer laminate, usually applied as a film or lacquer. This layer helps protect the data and prevent counterfeiting and fraudulent alteration. The security sheet may be formed from a fibrous substrate and may comprise security features, such as watermarks, laser perforations, security fibres, security threads, security print and the like.

Alternatively, the security sheet may be formed from a sheet comprising a plastic, which is typically polycarbonate. Plastic sheets are more durable than fibrous substrate security sheets and are resistant to delamination by a counterfeiter. During manufacture a number of thin plastic layers are laid over one another and fused together to form a thicker plastic sheet. The most common method of fusing the thinner plastic layers together involves placing them in between a "sandwich" of steel or brass laminating plates. A number of such sandwiches are stacked on top of each other and heat is applied to the top and bottom of the stack. The heat is transferred through the thinner plastic layers and laminating plates such that the thinner plastic layers fuse together, thereby forming a plastic sheet within each sandwich. A low temperature is then applied to the top and bottom of the stack to cool and harden the plastic sheets. However, such a method is relatively time inefficient as each heating and cooling cycle lasts for around thirty minutes. Furthermore, it can lead to uneven fusing and quality of the plastic sheets due to varying temperature and pressure distribution throughout the stack. This is caused by the laminating plates closer to the top and bottom of the stack usually being hotter (during heating) or colder (during cooling) than those in the middle of the stack.

An alternative, semi-continuous, method of manufacturing plastic security sheets for security documents is disclosed in US-B-6669813. The thin plastic layers are brought together before being incrementally conveyed between two opposing continuous belts through a series of heating and cooling devices. A section of the thin plastic layers is initially kept stationary by the continuous belts and the layers are heated and pressed together under pressure by the heating devices such that they fuse into a plastic sheet. After a certain amount of time, typically less than a minute, the continuous belts move the section to between the cooling devices where it is cooled and pressure is again applied, typically for less than a minute. The resulting plastic sheets are substantially uniform in quality.

A plastic security sheet may comprise various security features, such as UV responsive arrangements, optically variable features, windowed or transparent features, laser-perforations, laser markings and tactile features. However, it is not usually possible to include some of the security features in a plastic security sheet which can be included in a fibrous substrate security sheet (such as watermarks). Furthermore, the manufacture of plastic security sheets using the semi-continuous method described above presents challenges when attempting to incorporate security features. WO-A-2015/104011 discloses a method of forming a window in a plastic security sheet by punching a transparent filler material from a strip and inserting the filler material into an aperture punched through several thin plastic layers. During lamination the filler material and thin plastic layers fuse together to form the plastic sheet with a transparent window therein.

Patent document WO2015/092741A1 discloses a method of manufacturing a security sheet according to the preamble of claim 1.

An object of the present invention is to provide a security sheet having improved security features and a method of manufacturing such a security sheet. A further object is to provide an apparatus suitable for manufacturing such a security sheet in a semi-continuous method.

The present invention therefore provides a method of manufacturing a plurality of security sheets for displaying personal data, the method comprising the steps of: inserting a plurality of inserts into a plurality of apertures in at least one plastic layer, each insert comprising a plastic insert substrate and at least one security element located within and/or on the insert substrate, wherein the at least one security element is detectable by a naked eye and/or a machine and the insert substrate of each of the plurality of inserts comprises an insert perimeter registered to the at least one security element; arranging plastic layers over opposing surfaces of the insert; and fusing at least the insert substrate and plastic layers together to form a plastic substrate.

A security sheet incorporating the insert would be hard for a counterfeiter to reproduce since the insert is typically located within the security sheet and the security feature is difficult to access for alteration.

The method preferably further comprises the step of cutting a strip comprising a plurality of security elements into a plurality of inserts. The strip preferably comprises a registration element in register with each of the plurality of security elements and each insert is cut with an insert perimeter which is in register with at least one security element and at least one registration element.

Preferably at least one plastic layer comprises an opaque region adjacent to the aperture. The insert substrate is preferably substantially transparent such that the plastic substrate comprises at least one window. The at least one security element is preferably opaque and extends continuously between edges of the insert such that the plastic substrate comprises at least two windows.

Preferably, during the arranging step, at least one security feature in or between the plastic layers is arranged in register with the at least one security element of the insert. The security feature preferably comprises a security thread which, during the arranging step, is arranged to in or between the plurality of plastic layers such that the security thread overlies the insert.

The method further preferably comprises the steps of cutting the plastic substrate into at least one security sheet and marking personal data in the at least one security sheet. The insert preferably comprises a first markable additive and at least one plastic layer comprises a second markable additive and the personal data is marked as first and second colours in the first and second markable additives.

The insert substrate and/or the plastic layers preferably comprise a thermoplastic polymer. The fusing step preferably comprises applying heat and pressure to at least the plastic layers such that at least the plastic layers are in an at least softened state. The plastic layers and/or insert substrate are preferably heated and pressurised to at least a Vicat softening point, determined as per the methods of ASTM D 1525 and ISO 306, of the plastic forming the plastic layers and/or insert substrate. The method preferably further comprises directing the plurality of plastic layers into a laminator, the laminator comprising at least one continuous belt having a support surface, and wherein at least one heating device of the laminator is applied under pressure to the plurality of plastic layers.

The present invention further provides an insert for incorporation into a security sheet for displaying personal data, the security sheet comprising a plastic substrate formed from a plurality of plastic layers, wherein the insert comprises: a plastic insert substrate for insertion into an aperture in, and for fusing to, at least one of the plurality of plastic layers; and at least one security element located within and/or on the insert substrate and detectable by a naked eye and/or a machine, wherein the insert substrate preferably defines an insert perimeter for matching the shape of the aperture and the at least one security element is registered to the insert perimeter.

In an embodiment the at least one security element preferably defines a security element perimeter which matches, and is smaller than, the insert perimeter. In a further embodiment the at least one security element continuously extends between the edges of the insert substrate for defining a plurality of windows in the plastic substrate once formed.

The at least one security element preferably comprises at least one of a security thread, a hologram, a foil, a demetallised structure, printed ink, a biometric data storage device and a markable additive material for marking with personalisation data after formation of the plastic security sheet. In one preferred embodiment the insert substrate comprises a strip insert inserted into a strip aperture, the strip insert comprising or forming the at least one security element.

The present invention further provides a security sheet for displaying personal data comprising a plastic substrate having first and second outer surfaces, wherein: the plastic substrate comprises at least one security element embedded therein and separated from the first and second outer surfaces; the plastic substrate is formed from a laminar structure fused together, the laminar structure comprising a plurality of plastic layers in which at least one plastic layer comprises an aperture having an insert located therein and plastic layers overlie opposing outer surfaces of the insert; and the insert comprises a plastic insert substrate and the at least one security element located within and/or on the insert substrate, wherein the at least one security element is detectable by a naked eye and/or a machine and at least the insert substrate is fused to the plurality of plastic layers, further wherein the insert comprises an insert perimeter which matches the aperture shape and the at least one security element is registered to the insert perimeter.

Preferably wherein the plastic substrate comprises an opaque region formed in the plurality of plastic layers adjacent to the aperture. Preferably the insert comprises an at least partially transparent insert substrate and the plastic substrate comprises at least one window formed from at least the insert substrate. The at least one security element is preferably registered to at least one window perimeter. The at least one security element preferably defines a security element perimeter which matches, and is smaller than, the insert perimeter. Alternatively, the at least one security element is preferably opaque and extends continuously between edges of the insert such that the plastic substrate comprises at least two windows.

At least one security feature is preferably located in or between the plastic layers and is arranged in register with the at least one security element of the insert. The security feature preferably comprises a security thread which is arranged to overlie the insert and the at least one security element comprises a security thread extending across the insert. The at least one security element preferably comprises a first markable additive embedded in the insert and the at least one security feature comprises a second markable additive embedded in at least one of the plurality of plastic layers, wherein the first markable additive is markable in a first colour and the second markable additive is markable in a second colour.

The present invention yet further provides a security document comprising the aforementioned security sheet. Preferably the at least one security element and at least one security feature comprise personal data relating to the holder. Further preferably the security document is a passport, identification document, identity card or driving licence.

The present invention yet further provides a method of manufacturing a plurality of inserts for incorporation into a plastic security sheet, the method comprising: forming a plurality of security elements in or on a plastic strip substrate, the plurality of security elements being detectable by a naked eye and/or a machine; cutting the strip substrate into a plurality of inserts, each insert comprising at least one security element and a plastic insert substrate for insertion in an aperture in at least one plastic layer and for fusing with the at least one plastic layer to form the plastic security sheet and. The method preferably further comprises the step of forming a plurality of registration elements in or on the strip of substrate, each registration element being in register with at least one security element, wherein during the cutting step a punching tool is registered to the registration element for forming an insert substrate having an insert perimeter in register with at least one security element.

By way of example only, embodiments of an insert, a laminar structure including such an insert, a security sheet including the insert and methods of manufacture in accordance with the present invention are now described with reference to, and as shown in, the accompanying drawings, in which:
Figure 1 is a plan view of a passport opened between a security sheet and a visa page;
Figure 2 is a cross-sectional side elevation of the security sheet of Figure 1 through section A-A;
Figure 3 is a plan view of a strip for forming a plurality of inserts for incorporation into the security sheet of Figure 1;
Figure 4 is a cross-sectional side elevation of the strip of Figure 3 through section B-B;
Figure 5 is a plan view of an insert formed from the strip of Figure 3;
Figure 6 a cross-sectional side elevation of a laminar structure prior to being laminated into a plastic substrate for forming the security sheet of Figure 1;
Figure 7 is a cross-sectional side elevation of an apparatus for use in a method of manufacturing the security sheet of the passport of Figure 1;
Figure 8 is a schematic cross-sectional side elevation of a portion of the security sheet of Figure 1 through section A-A showing the materials forming the security sheet;
Figure 9 is a plan view of a further embodiment of a passport opened between a security sheet and a visa page;
Figure 10 is a plan view of an insert for incorporation into the security sheet of Figure 9;
Figure 11 is a plan view of a further embodiment of a strip for forming a plurality of inserts for incorporation into a security sheet;
Figure 12 is a cross-sectional side elevation of the strip of Figure 11 through section C-C;
Figure 13 is a plan view of an insert formed from the strip of Figure 11;
Figure 14 is a plan view of another embodiment of a strip for forming a plurality of inserts for incorporation into the security sheet of Figure 1;
Figure 15 is a cross-sectional side elevation of the strip of Figure 14 through section D-D;
Figure 16 is a plan view of another embodiment of a strip for forming a plurality of inserts for incorporation into the security sheet of Figure 1;
Figure 17 is a cross-sectional side elevation of the strip of Figure 16 through section E-E;
Figure 18 is a plan view of an insert formed from the strip of Figure 16;
Figure 19 is a plan view of a further embodiment of a passport opened between a security sheet and a visa page wherein the security sheet comprises the insert of Figure 18;
Figure 20 is a plan view of yet a further embodiment of a passport opened between a security sheet and a visa page;
Figure 21 is a plan view of yet a further embodiment of a passport opened between a security sheet and a visa page;
Figure 22 is a cross-sectional side elevation of the security sheet of Figure 21 through section F-F; and
Figure 23 is a plan view of another embodiment of a strip for forming a plurality of inserts for incorporation into the security sheet of Figure 21.

### Detailed description

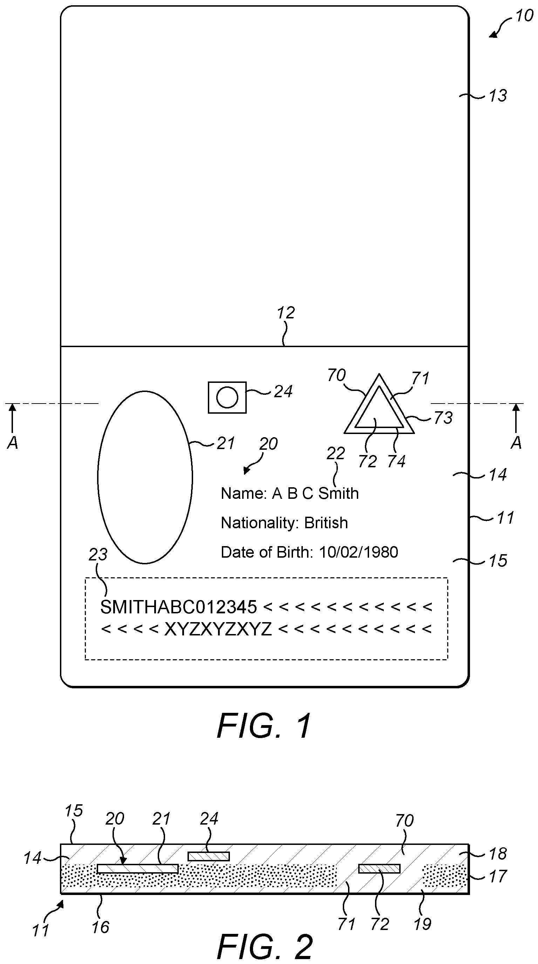

Figure 1 illustrates a security document 10, in this case a passport, comprising a security sheet 11, in this case a data page, sewn along a stitch line 12 to a plurality of visa pages 13 and a cover (not shown). The visa pages 13 are typically made from a fibrous substrate, such as paper, and may include a number of security features, such as security fibres and watermarks.

As shown in further detail in Figure 2, the security sheet 11 comprises a plastic substrate 14 having a first outer surface 15 and a second outer surface 16. Each of the first and second outer surfaces 15, 16 is preferably substantially flat and planar. The plastic substrate 14 is formed from a plurality of layers which are fused together into a substantially non-laminar or unitary structure. The plastic from which the plastic substrate 14 is formed may be a thermoplastic polymer, such as polycarbonate, polyester, polyethylene, polypropylene or polyvinyl chloride. Polycarbonate is particularly suitable due to its high durability, its ease of manufacture and the ease with which security features can be incorporated within it.

The security sheet 11 may be substantially rigid or at least semi-rigid, by virtue of the thickness of the plastic substrate 14. The thickness of the plastic substrate 14, which is the distance between the first and second outer surfaces 15, 16, is preferably at least approximately 150 µm and more preferably at least approximately 300 µm. In particular, the plastic substrate 14 may be between approximately 300 µm and 1000 µm thick and, for example, may be approximately 800 µm thick.

The plastic substrate 14 preferably comprises a substantially opaque region 17 within its thickness and separated from the first and second outer surfaces 15, 16 by first and second substantially transparent regions 18, 19. The plastic substrate 14 further comprises at least one window 70, which is formed from a third substantially transparent region 71 and the portions of the first and second transparent regions 18, 19 overlying the third transparent region 71. The at least one window 70 is substantially transparent such that visible light can pass through it and objects can be seen through it. The at least one window 70 may be clear, coloured or the like by suitable selection of the properties of the first, second and third transparent regions 18, 19, 71.

The at least one window 70 surrounds at least one security element 72, which is separated from the first and second outer surfaces 15, 16. Preferably the at least one window 70 and at least one security element 72 are in register with one another. "In register" in the present disclosure refers to two features, such as the at least one window 70 and at least one security element 72, being at substantially the same predetermined position relative to one another in a plurality of security documents 10. In the illustrated embodiment the at least one security element 72 is an opaque region and is separated from the first and second outer surfaces 15, 16 by the first and second transparent regions 18, 19. The shape of the perimeter 74 of the security element 72 is the same as the shape of the window perimeter 73, but transformed by a scale factor of less than one. In particular, the security element perimeter 74 is a smaller triangle than that of the window perimeter 73.

A series of laser markings 20 may be located within the plastic substrate 14 in the first transparent region 18 between the opaque region 17 and the first outer surface 15. The series of laser markings 20 may be used to provide personal data of the holder of the security document 10. Such personal data is known as "variable data" or "biographical data" and is provided in the security sheet 11 to identify the specific holder of the security document 10. The Seventh Edition (2015) of Document 9303 ("Machine Readable Travel Documents") issued by the International Civil Aviation Organization (ICAO) describes such biographical data and its contents are incorporated herein by reference. Typically, no two security documents 10 issued by an issuing authority contain the same variable data. The personal data includes, for example, the holder's portrait 21, text 22 providing the holder's name, nationality and date of birth and a machine readable zone 23 containing machine readable data. The personal data may be applied to the plastic substrate 14 by any suitable method, such as printing, as an alternative to, or in addition to, the series of laser markings 20.

A hologram 24 is also preferably located within the first transparent region 18. The hologram 24 may be in the form of non-variable data, in that it represents generic information which is typically present in a number of security documents 10 issued by an issuing authority. For example, the hologram 24 may indicate the issuing authority of the security document 10 or it may be in the form of a pattern or image. The series of laser markings 20 and hologram 24 are preferably visible when the first outer surface 15 is viewed in reflected light incident upon the first outer surface 15 by virtue of the first transparent region 18 in which they are located. The plastic substrate 14 may also comprise any other suitable security feature, such as UV responsive features, optically variable features, windowed or transparent features, antenna, electronic chips and laser-perforations.

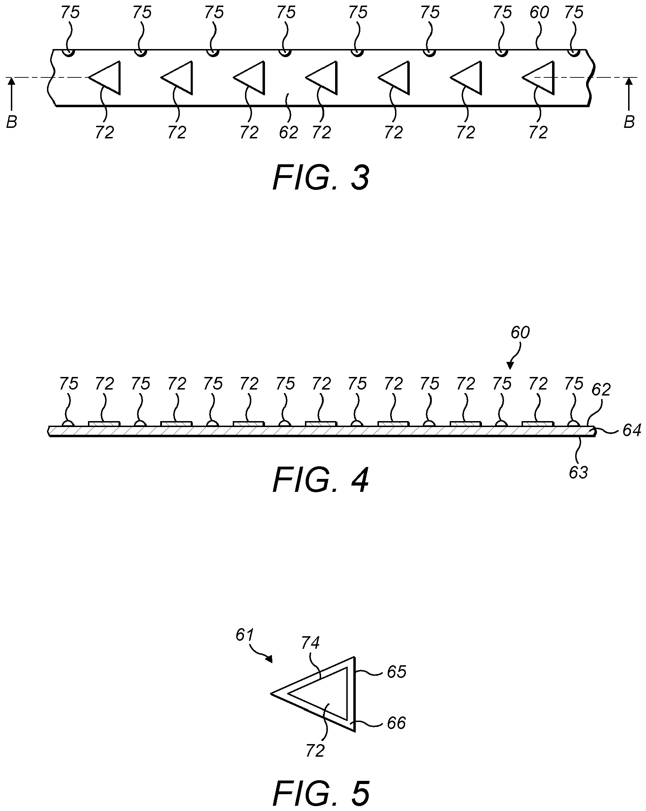

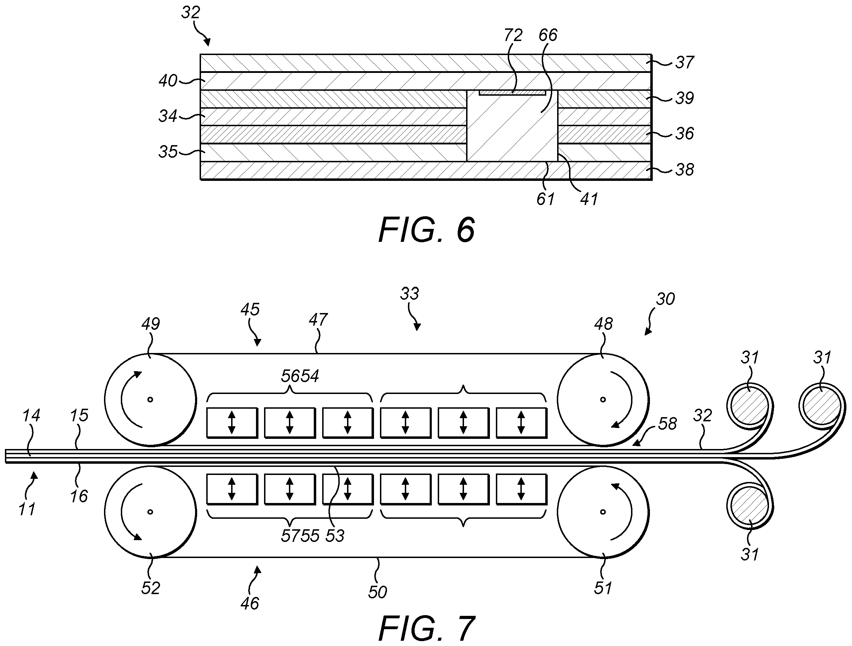

The security sheet 11 is generally manufactured by forming a strip 60 (as shown in Figures 3 and 4), cutting the strip 60 into a plurality of inserts 61 (as shown in Figure 5), forming a laminar structure 32 including at least one insert 61 therein (as shown in Figure 6), laminating the laminar structure 32 to form the plastic substrate 14 (as shown in Figure 7) and cutting the plastic substrate 14 into at least one security sheet 11.

The strip 60 comprises a plurality of security elements 72 equally spaced along a substantially planar strip substrate 64, which may be transparent or opaque. Each security element 72 of the illustrated embodiment comprises printed ink on at least one of the outer surfaces 62, 63 of the strip substrate 64. The ink may be intaglio ink, flexo ink, gravure ink, offset printing ink, optically variable ink and/or optically variable magnetic ink. In particular, the ink may comprise a magnetic OVI pigment as disclosed in WO-A-2010/139930. The ink may comprise machine readable materials, for example in the form of detectable materials which react to an external stimulus including, but not limited to, fluorescent, infrared absorbing, phosphorescent, thermochromic, photochromic, magnetic, electrochromic, conductive and piezochromic materials.

The strip 60 may further comprise a plurality of registration elements 75 located on at least one of the outer surfaces 62, 63 of the strip substrate 64. Each registration element 75 is at a predetermined position relative to a security element 72 and, as a result, their positions are registered to one another. A single printing head may be used to simultaneously print every registered pair of security elements 72 and registration elements 75 onto the strip substrate 64.

The strip 60 may subsequently be cut by a punching tool to form a plurality of inserts 61 before or during the formation of the laminar structure 32. Each insert 61 comprises an insert substrate 66 and at least one security element 72 located within or on the insert substrate 66. The shape of the punching tool is selected to provide an insert 61 with a shape having a predetermined insert perimeter 65 and, as will become apparent, the shape of the insert perimeter 65 is substantially the same as that of the window perimeter 73 in the security sheet 11. During cutting the punching tool may register the insert perimeter 65 to the at least one security element 72 on the insert 61, such that the relative position between the at least one security element 72 and the insert perimeter 65 is the same on every insert 61 formed from the strip 60. The punching tool may detect the position of the registration element 75, for example by using optical sensors, and punch the insert perimeter 65 at a predetermined position relative to the registration element 75.

The laminar structure 32, as illustrated in Figure 6, comprises a plurality of plastic layers 34, 35, 36, 37, 38, 39, 40 and at least one insert 61. The laminar structure 32 is preferably capable of forming a plurality of security sheets 11, although only a portion of the laminar structure 32 for forming a single security sheet 11 is shown in Figure 6. In particular, the laminar structure 32 comprises first and second opaque layers 34, 35, which are typically white and/or opaque, and an inlay 36 therebetween. Graphical information, colours and/or patterns may be printed on the outer surfaces of the first and second opaque layers 34, 35. Electronic chips and antenna or the like may be located within the inlay 36 or first and second opaque layers 34, 35.

Substantially transparent first and second overlays 37, 38 are located at the outer most sides of the laminar structure 32 and form the first and second outer surfaces 15, 16 of the plastic substrate 14. First and second intermediate layers 39, 40 for holding security features are located between the first opaque layer 34 and the first overlay 37. In particular, the first intermediate layer 39 may be substantially opaque and located adjacent to the first opaque layer 34. The first intermediate layer 39 is arranged to be laser engraved with the personal data through the first outer surface 15 of the plastic substrate 14. For example, the first intermediate layer 39 may comprise a laser markable additive, such as by being carbon enriched. The second intermediate layer 40 is located between the first overlay 37 and the first intermediate layer 39, is substantially transparent and includes the hologram 24 therein or on its surface. In other embodiments any suitable number of intermediate layers, on either side of the first and second opaque layers 34, 35, may be used in order to provide different security features.

Each insert 61 may be located in an aperture 41 through the first and second opaque layers 34, 35, the inlay 36 and the first intermediate layer 39. The opposing outer surfaces 62, 63 of each insert 61 are overlaid by the second overlay 38 and second intermediate layer 40. Alternatively, each aperture 41 may be formed in, and each insert 61 located in, only one or two of the first opaque layer 34, the second opaque layer 35, the inlay 36 and/or the first intermediate layer 39.

The insert 61 may be punched from the strip 60 separately to the formation of the aperture 41 in the first opaque layer 34, the second opaque layer 35 and/or the inlay 36. However, preferably the aperture 41 and insert 61 are formed and brought together in line, as is disclosed in WO-A-2015/104011. In particular, a single punch component may be operated to form the aperture 41 in the first and second opaque layers 34, 35 and inlay 36, which are held together during the punching. The punch component then cuts or punches the insert 61 from the strip 60 and places the insert 61 in the aperture 41. The shape of the aperture 41 matches the shape of the insert perimeter 65 such that their edges are substantially adjacent to and substantially in contact with one another. The insert 61 is preferably friction fitted into the aperture 41, although it may be loosely fitted and held in place by adhesive or other layers of the laminar structure 32.

Each of the layers 34, 35, 36, 37, 38, 39, 40 of the laminar structure 32 may be between approximately 0.05 mm thick and approximately 3 mm thick. Each of the layers 34, 35, 36, 37, 38, 39, 40 is comprised of the plastic forming the plastic substrate 14, such as polycarbonate, although they may be formed of different plastics provided that they are able to fuse together. The insert 61 may have a thickness of between approximately 0.1 mm and approximately 0.4 mm and may have a largest dimension (i.e. its width) of approximately 10 mm. The strip substrate 64 may be the same plastic from which the laminar structure 32 is formed, such as polycarbonate or the like.

Figure 7 illustrates an embodiment of an apparatus 30 suitable for manufacturing a plurality of security sheets 11. The apparatus 30 is similar to the device disclosed in US-B-6669813, the contents of which are incorporated herein by reference. The apparatus 30 comprises a plurality of feeders 31 for arranging the laminar structure 32 prior to feeding it into a laminator 33. The laminator 33 fuses the laminar structure 32 together by the application of heat and pressure to form the plastic substrate 14.

The laminator 33 comprises first and second continuous belts 45, 46 which rotate in opposite directions. The first continuous belt 45 comprises a first support surface 47 extending around first inlet and outlet drums 48, 49 and the second continuous belt 46 comprises a second support surface 50 extending around second inlet and outlet drums 51, 52. The first and second support surfaces 47, 50 are substantially adjacent to one another over an elongate laminating region 53 for receiving and pressurising the laminar structure 32 therebetween. Opposing heating devices 54, 55 are located adjacent to the first and second inlet drums 48, 51 within each of the first and second continuous belts 45, 46. Opposing cooling devices 56, 57 are located between the heating devices 54, 55 and the first and second outlet drums 49, 52. The heating and cooling devices 54, 55, 56, 57 are operable to move towards and away from the first and second support surfaces 47, 50 and apply pressure to the laminar structure 32 between them. A plurality of alternating heating and cooling devices 54, 55, 56, 57 may be provided along the length of the laminator 33.

At least one of the first and second continuous belts 45, 46 is intermittently driven to draw the laminar structure 32 into the laminator 33 through a nip 58 between the first and second inlet drums 48, 51. Initially a region of the laminar structure 32 is moved between the heating devices 54, 55. The heating devices 54, 55 move towards the first and second support surfaces 47, 50 to heat and pressurise the region of the laminar structure 32 to form the plastic substrate 14. After a set period of time, typically less than a minute, the heating devices 54, 55 move away from the first and second support surfaces 47, 50 and the first and/or second continuous belt 45, 46 is driven to move the region to between the cooling devices 56, 57. The cooling devices 56, 57 move towards the first and second support surfaces 47, 50 and cool and apply pressure to the plastic substrate 14 in order to maintain its structure. This heating, cooling and pressure application process is repeated along the plurality of alternating heating and cooling devices 54, 55, 56, 57 until the fully formed plastic substrate 14 exits the laminator 33.

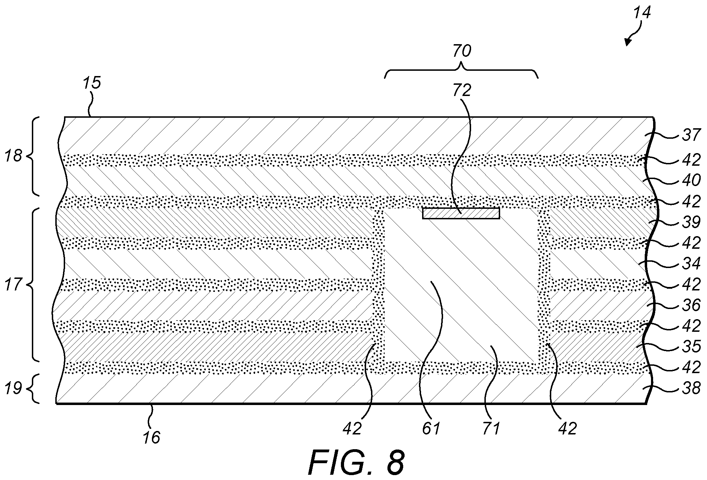

During the heating process each of the layers 34, 35, 36, 37, 38, 39, 40 and insert substrates 66 become at least softened or semi-molten (i.e. a liquid of relatively high viscosity) so that the plastic flows and mixes together across the interfaces between them. Figure 8 is a schematic of the materials forming a section of the plastic substrate 14 after fusing of the laminar structure 32. The first overlay 37 and second intermediate layer 40 form the first transparent region 18. The first and second opaque layers 34, 35, the inlay 36 and the first intermediate layer 39 form the opaque region 17. The second overlay 38 forms the second transparent region 19. The insert 61 forms the third transparent region 71 and the at least one window 70. The plastic substrate 14 comprises mixed regions 42 formed at positions that correspond to the interfaces between neighbouring layers 34, 35, 36, 37, 38, 39, 40 and insert 61 of the laminar structure 32. The mixed regions 41 comprise varying concentrations of plastic from neighbouring layers 34, 35, 36, 37, 38, 39, 40 and inserts 61 in the laminar structure 32. As shown in Figure 2, the series of laser markings 20 and hologram 24 (or other security features) are formed at locations in the plastic substrate 14 that substantially correspond to their locations in in the laminar structure 32.

In order to achieve such fusing the heating devices 54, 55 may be suitably controlled to raise the temperature and pressure applied to the laminar structure 32 to reach the softening point of the plastic. A temperature at which deformation and therefore fusion is possible at a certain pressure can be ascertained using the Vicat softening point test of any of the methods of the ASTM D 1525 and ISO 306 standards. The Vicat softening point may be the temperature at which a specimen is penetrated to a depth of 1 mm by a flat-ended needle with a 1 mm² circular or square cross-section. In a particular example, the Vicat softening point for polycarbonate can be determined using a heating rate of 50°C/hr and a load rate of 50 N. In a further example for polycarbonate, the heating devices 54, 55 may apply a temperature of approximately 180 °C at approximately 8 MPa to the laminar structure 32 and the cooling devices 56, 57 may apply a temperature of approximately 20 °C to 30 °C and a pressure of 10 MPa to the laminar structure 32. In yet a further example for polycarbonate, the heating devices 54, 55 may apply a temperature of approximately 180 °C at approximately 1.6 N/mm² to the laminar structure 32 and the cooling devices 56, 57 may apply a temperature of approximately 20 °C to 30 °C at a pressure of 3.2 N/mm² to the laminar structure 32. This latter example is particularly appropriate where the region of the laminar structure 32 between the heating or cooling devices 54, 55, 56, 57 has a surface area of 130 mm by 190 mm.

After the plastic substrate 14 has exited the laminator 33 it may be subject to further processing, such as the addition of further security features to the first and/or second outer surfaces 15, 16. The plastic substrate 14 may also be cut into a plurality of security sheets 11. Each security sheet 11 may then be bound with the visa pages 13 and cover to form a passport as shown in Figure 1 or may be used to form another security document 10. The security document 10 comprising the security sheet 11 may be of any other suitable type, such as a driving licence or identity card. The personal data relating to the holder of the security document 10 may also be laser marked into each security sheet 11.

The method of manufacture provides an improved method for inserting security features as part of the insert 61 into the plastic substrate 14. A single strip 60 with the security elements 72 can be manufactured in a single machine prior to cutting and insertion as inserts 61 into the laminar structure 32. Furthermore, the use of a strip 60 enables a continuous method of manufacturing to be implemented.

The at least one security element 72 is clearly visible within the at least one window 70. Registration of the at least one security element 72 with the window 70, particularly the window perimeter 73, is also ensured such that the relative position between the at least one security element 72 and window 70 may be the same in a plurality of security documents 10. An inspector of the security document 10 can check for the presence of the at least one security element 72 and its position relative to the window 70 to verify the authenticity of the security document 10.

In order to reproduce such a security document 10 a counterfeiter needs to form the at least one security element 72 within the at least one window 70 and separate from the first and second outer surfaces 15, 16. Specialist machinery is required to form these features and thus it is difficult to produce accurately. Furthermore, the counterfeiter will struggle to adapt the security element 72 as, in order to do so, they would need to remove and replace the portions of the first and second transparent regions 18, 19 overlying the security element 72. Such tampering would be difficult to perform without being immediately evident to an inspector of the security document 10.

Various alternatives to those described above also fall within the scope of the present invention. The window perimeter 73 and security element perimeter 74 may form, for example, patterns, indicia, symbols, logos or the like. Preferably the window perimeter 73 and security element perimeter 74 are the same in addition to the positional registration between them. Furthermore, a plurality of security elements 72 may be located within each window 70 and may together be registered to the window 70.

The strip 60 may or may not itself be formed from a plurality of plastic layers fused together. The layers are preferably fused together before the punching of the inserts 61 from the strip 60. The number of plastic layers forming the strip 60 may be the same as the number of plastic layers 34, 35, 36, 37, 38, 39, 40 of the laminar structure 32 forming the aperture 41 (for example, the strip 60 may be formed from four layers in Figure 6). Preferably the number of plastic layers forming the strip 60 is less than the number of plastic layers 34, 35, 36, 37, 38, 39, 40 of the laminar structure 32 forming the aperture 41 (for example, the strip 60 may be formed from two layers in Figure 6). The at least one security element 72 may be located between any one of the layers forming the strip 60 and therefore can be at different depths within the thickness of the insert 61.

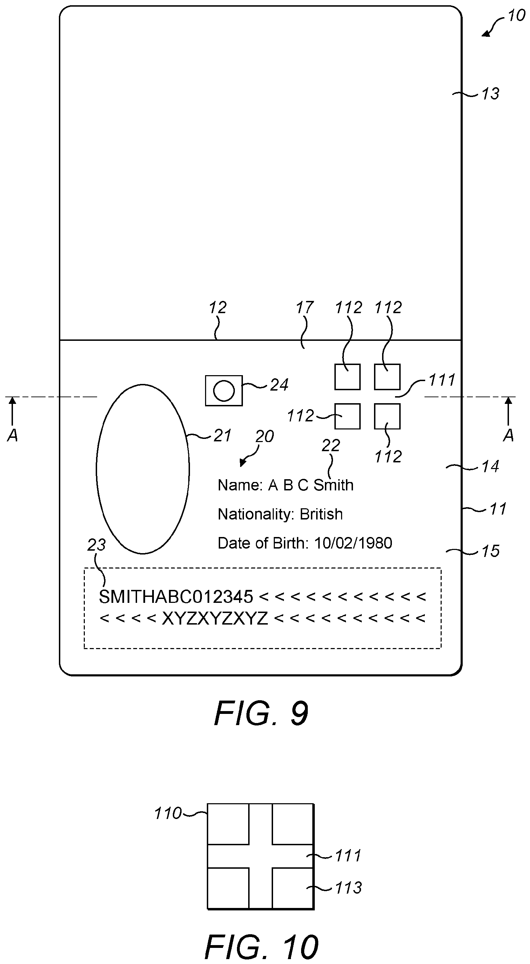

Figures 9 and 10 illustrate an embodiment of the security document 10 in which the insert 110 comprises at least one security element 111 continuously extending between edges of the insert such that a plurality of windows 112 are formed in the security sheet 11. Preferably the at least one security element 111 is opaque and is the same colour as the opaque region 17 of the plastic substrate 14. As a result, the at least one security element 111 is indistinguishable from the rest of the opaque region 17 in the security sheet 11 when viewed in the first and/or second outer surface 15, 16. In the illustrated embodiment one security element 111 is printed onto the insert substrate 113 in the shape of a cross such that the security sheet 11 comprises four square windows 112. However, the at least one security element 111 may comprise any other security feature, including those disclosed below, and may form any number of windows 112 as a pattern, indicia, symbol, logo or the like.

Different security features, detectable by the naked eye or a machine, can be incorporated into the security sheet 11 via the insert 61. Instead of print, each security element 72, 111 may comprise another security feature applied to at least one of the strip outer surfaces 62, 63, such as a hologram, a foil or the like. In a particular embodiment the security element 72, 111 is formed by demetallisation, in which a laser demetallises a suitable material in or on the insert 61 before or after lamination.

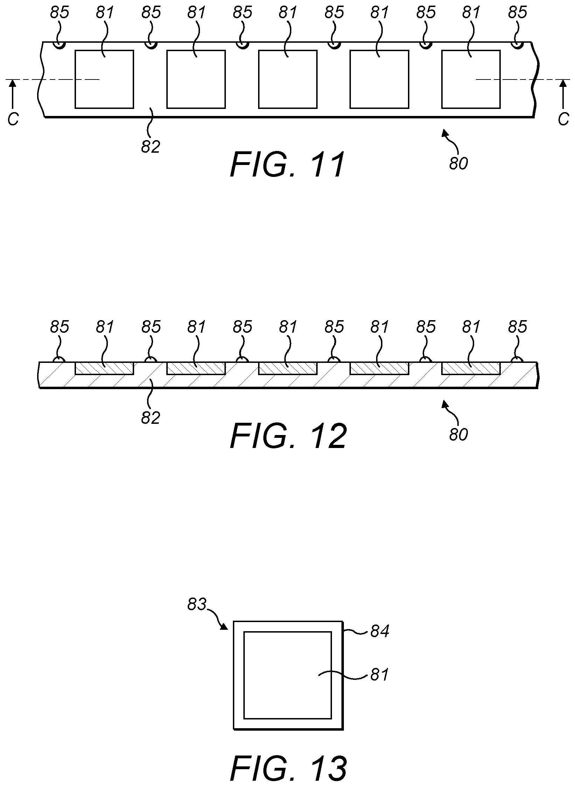

Figures 11 and 12 illustrate a further embodiment of a strip 80 comprising a plurality of security elements 81 embedded in and along a strip substrate 82. Each security element 81 may be in the form of a biometric data storage device capable of being programmed with personalisation data relating to the owner of the security document 10. Registration elements 85, for example comprising printed ink, may be applied simultaneously to the insertion of the biometric data storage device into the strip substrate 82 to allow for registration of the position between the insert perimeter 84 and the biometric data storage device. Furthermore, in the resulting insert 83, as shown in Figure 13, the insert perimeter 84 may be square and matched to the shape of the security element 81.

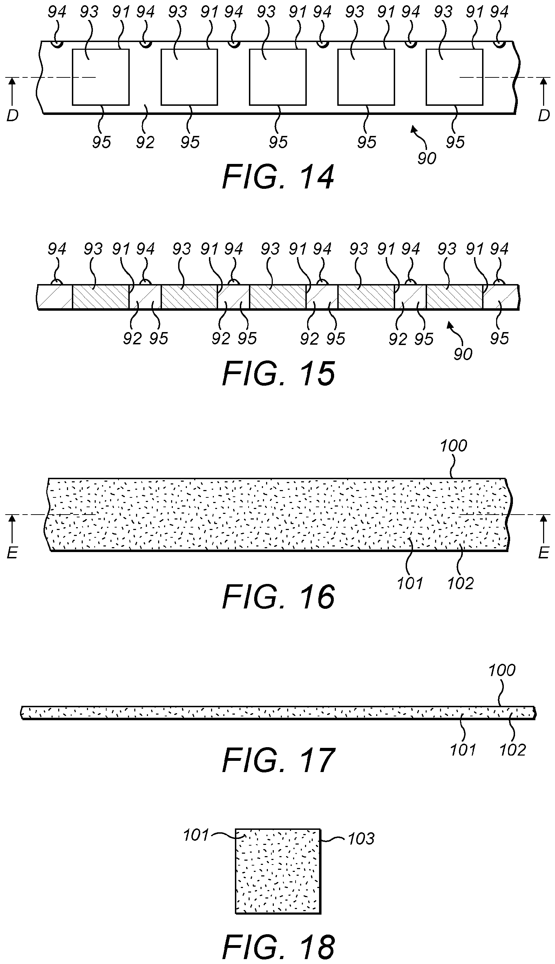

In a similar embodiment, as illustrated in Figures 14 and 15, the strip 90 may comprise a plurality of strip apertures 91 in the strip substrate 92. Strip inserts 93 are inserted and adhered or friction fitted into each strip aperture 91. The strip inserts 93 form and/or comprise the security elements 95 and may comprise biometric data storage devices. Registration elements 94, for example comprising printed ink, may be applied simultaneously to the formation of the strip apertures 91 to allow for registration of the position between the strip inserts 93 and the inserts punched from the strip 90.

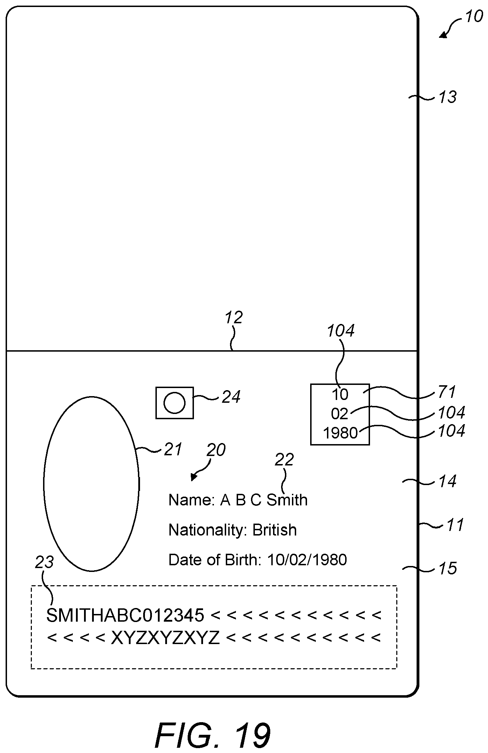

In yet a further embodiment, as illustrated in Figures 16 and 17, the strip 100 may comprise a markable additive 101 embedded within a strip substrate 102, which is preferably substantially opaque. The additive 101 is preferably laser markable. The strip 100 is cut into a plurality of inserts 103, as shown in Figure 18. As is shown in Figure 19, the additive 101 may be marked in the window 70 after formation of the security document 10 with at least one security element 104, which is preferably in the form of personalisation data relating to the owner of the security document 10. In the illustrated embodiment the window 70 comprises laser marked security elements 104 in the form of the data of birth of the owner. A suitable laser marking method is disclosed in EP-B-1245407, although other marking methods such as metal engraving or the like are also suitable.

In particular, the additive 101 may be alterable by the application of external stimuli, such as pressure or temperature, by, for example, a laser. In particular embodiments the additive 101 may comprise Bragg stack tunable materials, as disclosed in WO-A-2015113143, or photonic crystal tunable materials, as disclosed in EP-A-2714411.

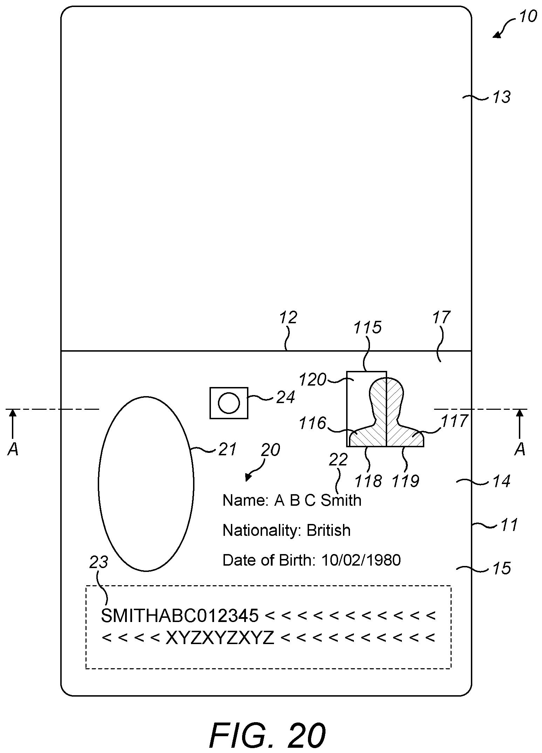

The at least one security element 72, 81, 95, 104 may also be in register with, or form a pattern or the like with, another security feature in or on the security sheet 11. Figure 20 illustrates a further embodiment of the security document 10 in which the insert 115 used to form the security sheet 11 comprises a markable first additive 116 associated with a markable second additive 117 within the opaque region 17. The first and second additives 116, 117 are selected such that, when marked, for example by a laser, they form first and second security elements 118, 119 having first and second colours. In particular, the first and second colours may be black and white. Suitable first and second additives 116, 117 are known in the art and, in particular, may comprises laser marking granules where the colour change upon laser irradiation takes place in the granule itself. Suitable granules include, for example, the portfolio of Iriotec® 8000 Granules from Merck KGaA of Germany. Alternatively, the laser irradiation may bleach a dark polycarbonate substrate forming the opaque region 17 and/or insert 115. The insert substrate 120 may be transparent, the same colour as the opaque region 17 and/or the same colour as the second security element 119. The first and second security elements 118, 119 preferably combine to form personal data in the form of an image, pattern, indicia, symbol, logo or the like having two contrasting colours marked within it. In the illustrated embodiment the first and second security elements 118, 119 each form half of a portrait of the holder of the security document 10. The opaque region 17 is white, the second security element 119 is black, the first security element 118 is white and the insert substrate 120 is black. Such alternating colours would be extremely difficult for a counterfeiter to reproduce or maintain when attempting to alter the portrait.

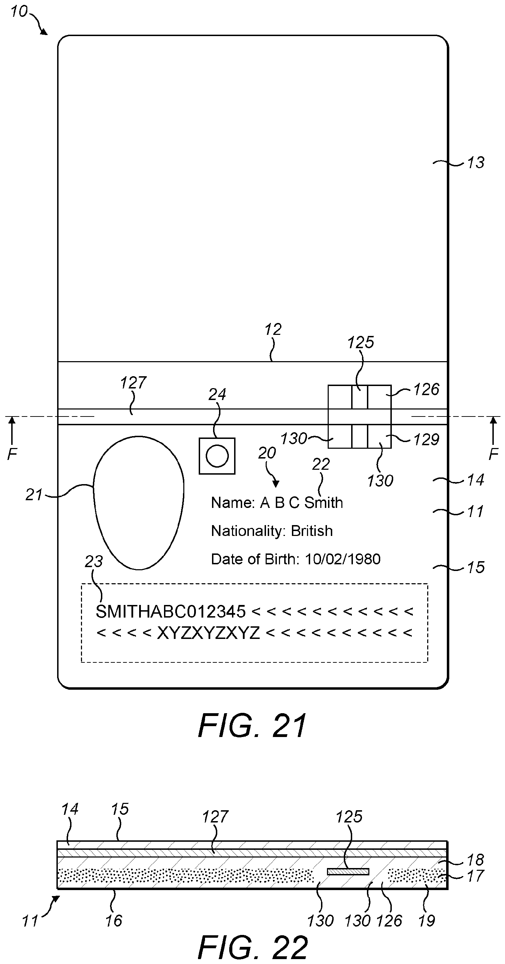

In a further embodiment, as illustrated in Figures 21 and 22, the security document 10 comprises at least one second security element 127 overlying at least one first security element 125 of the insert 126. The first and second security elements 125, 127 may together form a completed pattern, indicia, symbol, logo or the like which is visible in transmitted or reflected light. The second security element 127 may comprise print, a thread, a hologram, a pre-hot foil, a foil or the like. The second security element 127 may comprise a filter or the like such that the first security element 125 is visible under different light conditions, such as by being visible only under UV light.

In the embodiment illustrated in Figures 21 and 22 the first and second security elements 125, 127 comprise security threads crossing over one another. The security thread forming the second security element 127 extends between edges of the security sheet and may be adhered within the laminar structure 32 prior to entering the laminator 33, as disclosed in EP-B-2611622. Alternatively, the security thread may comprise one or more outer layers formed of a plastic (such as polycarbonate) which, during the lamination process, fuses with the plastic of the laminar structure 32. In yet a further alternative, the security thread may be coextruded with a plastic such that it is integrally formed within the laminar structure 32, as disclosed in US-A-2014/0138444.

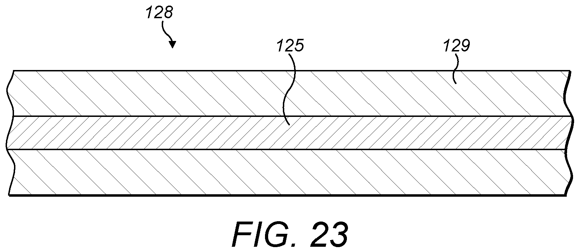

As shown in Figure 23, the security thread forming the first security element 125 may be incorporated substantially continuously into a strip 128 for forming a plurality of inserts 126. Thus the insert 126 can incorporate a non-continuous thread which does not extend between edges of the security sheet 11. Furthermore, if the strip substrate 129 is substantially transparent, the security sheet 11 will comprise at least two windows 130.

The security sheet 11 may comprise additional security features, such as further windows located at and extending along the edge of the security sheet 11. The opaque region 17 may comprise a shape or the like along its edge such that the at least one window forms a predefined shape. The further window(s) may be formed according to the method disclosed above or in WO-A-2015/104011. Alternatively, the further window(s) may be formed by providing transparent portions of the first and second opaque layers 34, 35, the inlay 36 and/or the first intermediate layer 39.

In another embodiment the opaque region 17 is visible as a first colour at the first outer surface 15 and as a second colour at the second outer surface 16 when viewed in reflected light. For example, the second opaque layer 35 and first intermediate layer 39 may comprise different additives to form the different colours. Fluorescent additives may be selected such that the different colours are only apparent when the first and/or second outer surfaces 15, 16 are viewed in reflected UV light. The different colours may also be visible in the thickness of the security sheet 11, particularly if the additives are included in the first opaque layer 34 and the inlay 36 and/or if the first and second opaque layers 34, 35, the inlay 36 and/or the first intermediate layer 39 are sufficiently thick.

Furthermore, in any of the examples above machine readable materials could be included in any of the laminar structure 32, inserts 61, 93, 103, 126 or any other material. Alternatively, they could comprise further machine readable layers or materials. The machine readable materials may contain detectable materials that react to an external stimulus, which may include but are not limited to fluorescent, phosphorescent, infrared absorbing, thermochromic, photochromic, magnetic, electrochromic, conductive and piezochromic materials.

## Claims

1. A method of manufacturing a plurality of security sheets (11) for displaying personal data, the method comprising the steps of:
inserting a plurality of inserts (61) into a plurality of apertures (41) in at least one plastic layer (34, 35, 36, 39), each insert (61) comprising a plastic insert substrate (66) and at least one security element (72) located within and/or on the insert substrate (66), **characterised in that** the at least one security element (72) is detectable by a naked eye and/or a machine and the insert substrate (66) of each of the plurality of inserts (61) comprises an insert perimeter (84) registered to the at least one security element (62);
arranging plastic layers (38, 40) over opposing surfaces of the insert (61); and
fusing at least the insert substrate (66) and plastic layers (34, 35, 36, 38, 39, 40) together to form a plastic substrate (14).

2. A method as claimed in claim 1 further comprising the step of cutting a strip (60) comprising a plurality of security elements (72) into a plurality of inserts (61).

3. A method as claimed in claim 2 wherein the strip (60) comprises a registration element (94) in register with each of the plurality of security elements (72) and each insert (61) is cut with the insert perimeter (84) which is in register with at least one security element (72) and at least one registration element (94).

4. A method as claimed in any one of the preceding claims wherein at least one plastic layer (34, 35, 36, 39) comprises an opaque region (17) adjacent to the plurality of apertures (41).

5. A method as claimed in 4 wherein the insert substrate (66) is substantially transparent such that the plastic substrate (14) comprises a plurality of windows (70).

6. A method as claimed in any one of the preceding claims wherein:
during the arranging step, at least one security feature in or between the plastic layers (34, 35, 36, 38, 39, 40) is arranged in register with the at least one security element (72) of each insert (61);
the insert substrate (66) and/or the plastic layers (34, 35, 36, 38, 39, 40) comprise a thermoplastic polymer;
the fusing step comprises applying heat to at least the plastic layers (34, 35, 36, 38, 39, 40) such that at least the plastic layers (34, 35, 36, 38, 39, 40) are in an at least softened state; and/or
the method further comprises the steps of cutting the plastic substrate (14) into at least one security sheet (11) and marking personal data in the at least one security sheet (11).

7. An insert (61) for incorporation into a security sheet (11) for displaying personal data, the security sheet (11) comprising a plastic substrate (14) formed from a plurality of plastic layers (34, 35, 36, 38, 39, 40), wherein the insert (61) comprises:
a plastic insert substrate (66) for insertion into an aperture (41) in, and for fusing to, at least one of the plurality of plastic layers (34, 35, 36, 39); and
at least one security element (72) located within and/or on the insert substrate (66) and detectable by a naked eye and/or a machine;
**characterised in that** the insert substrate (66) defines an insert perimeter (84) for matching the shape of the aperture (41) and the at least one security element (72) is registered to the insert perimeter (84).

8. An insert (61) as claimed in claim 7 wherein:
the at least one security element (72) defines a security element perimeter (74) which matches, and is smaller than, the insert perimeter (84);
the at least one security element (72) continuously extends between the edges of the insert substrate (66) for defining a plurality of windows (70) in the plastic substrate (14) once formed;
the at least one security element (72) comprises at least one of a security thread, a hologram, a foil, a demetallised structure, printed ink, a biometric data storage device and a markable additive material for marking with personalisation data after formation of the plastic security sheet; and/or
the insert substrate (66) comprises a strip insert (93) inserted into a strip aperture (91), the strip insert (93) comprising or forming the at least one security element (72).

9. A security sheet (11) for displaying personal data comprising a plastic substrate (14) having first and second outer surfaces (15, 16), wherein:
the plastic substrate (14) comprises at least one security element (72) embedded therein and separated from the first and second outer surfaces (15, 16);
the plastic substrate (14) is formed from a laminar structure fused together, the laminar structure comprising a plurality of plastic layers (34, 35, 36, 38, 39, 40) in which at least one plastic layer (34, 35, 36, 39) comprises an aperture (41) having an insert (61) located therein and plastic layers (38, 40) overlie opposing outer surfaces of the insert (61); and
the insert (61) comprises a plastic insert substrate (66) and the at least one security element (72) located within and/or on the insert substrate (66), wherein the at least one security element (72) is detectable by a naked eye and/or a machine and at least the insert substrate (66) is fused to the plurality of plastic layers (34, 35, 36, 38, 39, 40), **characterised in that** the insert (61) comprises an insert perimeter (84) which matches the aperture (41) shape and the at least one security element (72) is registered to the insert perimeter (84).

10. A security sheet (11) as claimed in claim 9 wherein:
the plastic substrate (14) comprises an opaque region (17) formed in the plurality of plastic layers (34, 35, 36, 39) adjacent to the aperture (41);
the at least one security element (72) defines a security element perimeter (74) which matches, and is smaller than, the insert perimeter (84); and/or
at least one security feature is located in or between the plastic layers (34, 35, 36, 38, 39, 40) and is arranged in register with the at least one security element (72) of the insert (61).

11. A security sheet (11) as claimed in claim 9 or claim 10 wherein the insert (61) comprises an at least partially transparent insert substrate (66) and the plastic substrate (14) comprises at least one window formed from at least the insert substrate (66).

12. A security sheet (11) as claimed in claim 11 wherein the at least one security element (72) is registered to at least one window perimeter.

13. A security document (10) comprising the security sheet (11) of any one of claims 9 to 12 wherein the at least one security element (72) and at least one security feature comprise personal data relating to the holder; and/or
wherein the security document (10) is a passport, identification document, identity card or driving licence.

14. A method of manufacturing a plurality of inserts (61) for incorporation into a plastic security sheet (11), the method comprising:
forming a plurality of security elements (72) in or on a plastic strip substrate (102), the plurality of security elements (72) being detectable by a naked eye and/or a machine;
cutting the strip substrate (102) into a plurality of inserts (61), each insert (61) comprising at least one security element (72) and a plastic insert substrate (66) for insertion in an aperture (41) in at least one plastic layer (34, 35, 36, 39) and for fusing with the at least one plastic layer (34, 35, 36, 39) to form the plastic security sheet (11), **characterised in that** the insert substrate (66) defines an insert perimeter (84) for matching the shape of the aperture (41) and the at least one security element (72) is registered to the insert perimeter (84).

15. A method as claimed in claim 14 further comprising the step of forming a plurality of registration elements (94) in or on the strip substrate (102), each registration element (94) being in register with at least one security element (72), wherein during the cutting step a punching tool is registered to the registration element (94) for forming an insert substrate (66) having an insert perimeter (84) in register with at least one security element (72).

## Patentansprüche

1. Verfahren zur Herstellung einer Mehrzahl von
Sicherheitsblättern (11) zum Anzeigen von persönlichen Daten, wobei das Verfahren die folgenden Schritte umfasst:
Einsetzen einer Mehrzahl von Einsätzen (61) in eine Mehrzahl von Öffnungen (41) in mindestens einer Kunststoffschicht (34, 35, 36, 39), wobei jeder Einsatz (61) ein Einsatzsubstrat (66) aus Kunststoff und mindestens ein Sicherheitselement (72) umfasst, das sich in und/oder auf dem Einsatzsubstrat (66) befindet,
**dadurch gekennzeichnet, dass** das mindestens eine Sicherheitselement (72) mit bloßem Auge und/oder einer Maschine detektierbar ist und das Einsatzsubstrat (66) eines jeden der mehreren Einsätze (61) einen auf das mindestens eine Sicherheitselement (62) ausgerichteten Einsatzumfang (84) aufweist;
Anordnen von Kunststoffschichten (38, 40) über gegenüberliegenden Oberflächen des Einsatzes (61); und
Verschmelzen von mindestens dem Einsatzsubstrat (66) und den Kunststoffschichten (34, 35, 36, 38, 39, 40) miteinander, um ein Kunststoffsubstrat (14) zu bilden.

2. Verfahren nach Anspruch 1, ferner mit dem Schritt des Zerschneidens eines Streifens (60), der eine Mehrzahl von Sicherheitselementen (72) umfasst, in eine Mehrzahl von Einsätzen (61).

3. Verfahren nach Anspruch 2, bei dem der Streifen (60) ein Ausrichtelement (94) in Ausrichtung auf jedes der mehreren Sicherheitselemente (72) aufweist und jeder Einsatz (61) mit dem Einsatzumfang (84) geschnitten wird, der auf mindestens ein Sicherheitselement (72) und mindestens ein Ausrichtelement (94) ausgerichtet ist.

4. Verfahren nach einem der vorstehenden Ansprüche, bei dem mindestens eine Kunststoffschicht (34, 35, 36, 39) einen undurchsichtigen Bereich (17) benachbart zu der Mehrzahl von Öffnungen (41) aufweist.

5. Verfahren nach Anspruch 4, bei dem das Einsatzsubstrat (66) im Wesentlichen transparent ist, so dass das Kunststoffsubstrat (14) eine Mehrzahl von Fenstern (70) aufweist.

6. Verfahren nach einem der vorhergehenden Ansprüche, bei dem:
während des Schritts des Anordnens mindestens ein Sicherheitsmerkmal in oder zwischen den Kunststoffschichten (34, 35, 36, 38, 39, 40) in Ausrichtung auf das mindestens eine Sicherheitselement (72) jedes Einsatzes (61) angeordnet wird;
das Einsatzsubstrat (66) und/oder die Kunststoffschichten (34, 35, 36, 38, 39, 40) ein thermoplastisches Polymer umfassen;
der Schritt des Verschmelzens das Aufbringen von Wärme auf zumindest die Kunststoffschichten (34, 35, 36, 38, 39, 40) derart umfasst, dass zumindest die Kunststoffschichten (34, 35, 36, 38, 39, 40) in einem zumindest erweichten Zustand sind; und/ oder
das Verfahren ferner die Schritte des Zerschneidens des Kunststoffsubstrats (14) in mindestens ein Sicherheitsblatt (11) und des Markierens persönlicher Daten in dem mindestens einen Sicherheitsblatt (11) umfasst.

7. Einsatz (61) zum Einbau in ein Sicherheitsblatt (11) zum Anzeigen persönlicher Daten, wobei das Sicherheitsblatt (11) ein Kunststoffsubstrat (14) umfasst, das aus einer Mehrzahl von Kunststoffschichten (34, 35, 36, 38, 39, 40) gebildet ist, wobei der Einsatz (61) umfasst:
ein Einsatzsubstrat (66) aus Kunststoff zum Einsetzen in eine Öffnung (41) in mindestens einer der mehreren Kunststoffschichten (34, 35, 36, 38, 39, 40) und zum Anschmelzen an diese; und
mindestens ein Sicherheitselement (72), das sich in und/oder auf dem Einsatzsubstrat (66) befindet und mit dem bloßen Auge und/oder einer Maschine erkennbar ist;
**dadurch gekennzeichnet, dass**
das Einsatzsubstrat (66) einen Einsatzumfang (84) passend zur Form der Öffnung (41) definiert und das mindestens eine Sicherheitselement (72) auf den Einsatzumfang (84) ausgerichtet ist.

8. Einsatz (61) nach Anspruch 7, bei dem:
das mindestens eine Sicherheitselement (72) einen Sicherheitselement-Umfang (74) definiert, der zum Umfang des Einsatzes (84) passt und kleiner als dieser ist;
das mindestens eine Sicherheitselement (72) sich kontinuierlich zwischen den Rändern des Einsatzsubstrats (66) erstreckt, um in dem Kunststoffsubstrat (14) nach Herstellung desselben eine Mehrzahl von Fenstern (70) zu definieren;
das mindestens eine Sicherheitselement (72) mindestens eines der folgenden umfasst: einen Sicherheitsfaden, ein Hologramm, eine Folie, eine entmetallisierte Struktur, gedruckte Tinte, eine biometrische Datenspeichervorrichtung und ein markierbares Zusatzmaterial zur Markierung mit Personalisierungsdaten nach der Bildung des Kunststoffsicherheitsblatts; und/ oder
das Einsatzsubstrat (66) einen Streifeneinsatz (93) umfasst, der in eine Streifenöffnung (91) eingeführt ist, wobei der Streifeneinsatz (93) das mindestens eine Sicherheitselement (72) umfasst oder bildet.

9. Sicherheitsblatt (11) zum Anzeigen von persönlichen Daten, das ein Kunststoffsubstrat (14) mit einer ersten und einer zweiten Außenfläche (15, 16) umfasst, wobei:
das Kunststoffsubstrat (14) mindestens ein darin eingebettetes und von der ersten und zweiten Außenfläche (15, 16) getrenntes Sicherheitselement (72) aufweist;
das Kunststoffsubstrat (14) aus einer miteinander verschmolzenen laminaren Struktur gebildet ist, wobei die laminare Struktur eine Mehrzahl von Kunststoffschichten (34, 35, 36, 38, 39, 40) umfasst, wobei mindestens eine Kunststoffschicht (34, 35, 36, 39) eine Öffnung (41) mit einem darin angeordneten Einsatz (61) umfasst und Kunststoffschichten (38, 40) über gegenüberliegenden Außenflächen des Einsatzes (61) liegen; und
der Einsatz (61) ein Einsatzsubstrat (66) aus Kunststoff und das mindestens eine Sicherheitselement (72) umfasst, das sich in und/oder auf dem Einsatzsubstrat (66) befindet, wobei das mindestens eine Sicherheitselement (72) mit bloßem Auge und/oder einer Maschine erkennbar ist und mindestens das Einsatzsubstrat (66) mit der Mehrzahl von Kunststoffschichten (34, 35, 36, 38, 39, 40) verschmolzen ist,
**dadurch gekennzeichnet, dass**
der Einsatz (61) einen Einsatzumfang (84) aufweist, der zur Form der Öffnung (41) passt, und das mindestens eine Sicherheitselement (72) auf den Einsatzumfang (84) ausgerichtet ist.

10. Sicherheitsblatt (11) nach Anspruch 9, bei dem:
das Kunststoffsubstrat (14) einen undurchsichtigen Bereich (17) umfasst, der in der Mehrzahl von Kunststoffschichten (34, 35, 36, 39) benachbart zu der Öffnung (41) ausgebildet ist;
das mindestens eine Sicherheitselement (72) einen Sicherheitselement-Umfang (74) definiert, der zu dem EinsatzUmfang (84) passt und kleiner als dieser ist; und/oder
mindestens ein Sicherheitsmerkmal sich in oder zwischen den Kunststoffschichten (34, 35, 36, 38, 39, 40) befindet und in Ausrichtung auf das mindestens eine Sicherheitselement (72) der Einlage (61) angeordnet ist.

11. Sicherheitsblatt (11) nach Anspruch 9 oder Anspruch 10, bei dem der Einsatz (61) ein mindestens teilweise transparentes Einsatzsubstrat (66) und das Kunststoffsubstrat (14) mindestens ein Fenster aufweist, das aus mindestens dem Einsatzsubstrat (66) gebildet ist.

12. Sicherheitsblatt (11) nach Anspruch 11, bei dem das mindestens eine Sicherheitselement (72) auf mindestens einen Fensterumfang ausgerichtet ist.

13. Sicherheitsdokument (10), das das Sicherheitsblatt (11) nach einem der Ansprüche 9 bis 12 umfasst, wobei das mindestens eine Sicherheitselement (72) und mindestens ein Sicherheitsmerkmal auf den Inhaber bezogene persönliche Daten umfassen; und/oder
wobei das Sicherheitsdokument (10) ein Reisepass, ein Ausweisdokument, ein Personalausweis oder ein Führerschein ist.

14. Verfahren zur Herstellung einer Mehrzahl von Einsätzen (61) zur Einarbeitung in ein Sicherheitsblatt (11) aus Kunststoff, wobei das Verfahren umfasst:
Bilden einer Mehrzahl von Sicherheitselementen (72) in oder auf einem Streifensubstrat (102) aus Kunststoff, wobei die Mehrzahl von Sicherheitselementen (72) mit dem bloßen Auge und/oder einer Maschine erkennbar ist;
Zerschneiden des Streifensubstrats (102) in eine Mehrzahl von Einsätzen (61), wobei jeder Einsatz (61) mindestens ein Sicherheitselement (72) und ein Kunststoffeinsatzsubstrat (66) zum Einsetzen in eine Öffnung (41) in mindestens einer Kunststoffschicht (34, 35, 36, 39) und zum Verschmelzen mit der mindestens einen Kunststoffschicht (34, 35, 36, 39), um das Sicherheitsblatt (11) aus Kunststoff zu bilden, umfasst,
**dadurch gekennzeichnet, dass**
das Einsatzsubstrat (66) einen Einsatzumfang (84) zur Anpassung an die Form der Öffnung (41) definiert und das mindestens eine Sicherheitselement (72) auf den Einsatzumfang (84) ausgerichtet ist.

15. Verfahren nach Anspruch 14, ferner mit dem Schritt des Ausbildens einer Mehrzahl von Ausrichtelementen (94) in oder auf dem Streifensubstrat (102), wobei jedes Ausrichtelement (94) auf mindestens ein Sicherheitselement (72) ausgerichtet ist, wobei während des Schritts des Schneidens ein Stanzwerkzeug auf das Ausrichtelement (94) ausgerichtet wird, um ein Einsatzsubstrat (66) mit einem Einsatzumfang (84) in Ausrichtung auf mindestens ein Sicherheitselement (72) auszubilden.

## Revendications

1. Procédé de fabrication d'une pluralité de feuilles de sécurité (11) pour afficher des données personnelles, le procédé comprenant les étapes consistant à :
insérer une pluralité d'inserts (61) dans une pluralité d'ouvertures (41) dans au moins une couche en plastique (34, 35, 36, 39), chaque insert (61) comprenant un substrat d'insert en plastique (66) et au moins un élément de sécurité (72) situé dans et/ou sur le substrat d'insert (66), **caractérisé en ce que** le au moins un élément de sécurité (72) est détectable à l'œil nu et/ou par une machine et le substrat d'insert (66) de chacun de la pluralité d'inserts (61) comprend un périmètre d'insert (84) calé avec le au moins un élément de sécurité (62) ;
agencer des couches en plastique (38, 40) sur des surfaces opposées de l'insert (61) ; et
fusionner au moins le substrat d'insert (66) et les couches en plastique (34, 35, 36, 38, 39, 40) ensemble pour former un substrat en plastique (14).

2. Procédé selon la revendication 1, comprenant en outre l'étape de découpe d'une bande (60) comprenant une pluralité d'éléments de sécurité (72) en une pluralité d'inserts (61).

3. Procédé selon la revendication 2, dans lequel la bande (60) comprend un élément de calage (94) calé avec chacun de la pluralité d'éléments de sécurité (72) et chaque insert (61) est découpé avec le périmètre d'insert (84) qui est calé avec au moins un élément de sécurité (72) et au moins un élément de calage (94).

4. Procédé selon l'une quelconque des revendications précédentes, dans lequel au moins une couche en plastique (34, 35, 36, 39) comprend une région opaque (17) adjacente à la pluralité d'ouvertures (41).

5. Procédé selon la revendication 4, dans lequel le substrat d'insert (66) est sensiblement transparent de telle sorte que le substrat en plastique (14) comprend une pluralité de fenêtres (70).

6. Procédé selon l'une quelconque des revendications précédentes, dans lequel :
au cours de l'étape d'agencement, au moins un élément de sécurité dans ou entre les couches en plastique (34, 35, 36, 38, 39, 40) est agencé calé avec le au moins un élément de sécurité (72) de chaque insert (61) ;
le substrat d'insert (66) et/ou les couches en plastique (34, 35, 36, 38, 39, 40) comprennent un polymère thermoplastique ;
l'étape de fusion comprend l'application de chaleur à au moins les couches en plastique (34, 35, 36, 38, 39, 40) de telle sorte qu'au moins les couches en plastique (34, 35, 36, 38, 39, 40) soient dans un état au moins ramolli ; et/ou
le procédé comprend en outre les étapes consistant à découper le substrat en plastique (14) en au moins une feuille de sécurité (11) et à marquer des données personnelles dans la au moins une feuille de sécurité (11).

7. Insert (61) à incorporer dans une feuille de sécurité (11) pour afficher des données personnelles, la feuille de sécurité (11) comprenant un substrat en plastique (14) formé d'une pluralité de couches en plastique (34, 35, 36, 38, 39, 40), dans lequel l'insert (61) comprend :
un substrat d'insert en plastique (66) pour une insertion dans une ouverture (41) dans, et pour la fusion avec, au moins une de la pluralité de couches en plastique (34, 35, 36, 39) ; et
au moins un élément de sécurité (72) situé dans et/ou sur le substrat d'insert (66) et détectable à l'œil nu et/ou par une machine ;
**caractérisé en ce que** le substrat d'insert (66) définit un périmètre d'insert (84) pour apparier la forme de l'ouverture (41) et le au moins un élément de sécurité (72) est calé par rapport au périmètre d'insert (84).

8. Insert (61) selon la revendication 7, dans lequel :
le au moins un élément de sécurité (72) définit un périmètre d'élément de sécurité (74) qui s'apparie au périmètre d'insert (84), et est plus petit que ce dernier ;
le au moins un élément de sécurité (72) s'étend en continu entre les bords du substrat d'insert (66) pour définir une pluralité de fenêtres (70) dans le substrat en plastique (14) une fois formé ;
le au moins un élément de sécurité (72) comprend au moins l'un d'un fil de sécurité, d'un hologramme, d'une feuille, d'une structure démétallisée, d'une encre imprimée, d'un dispositif de stockage de données biométriques et d'un matériau additif pouvant être marqué pour un marquage avec des données de personnalisation après la formation de la feuille de sécurité en plastique ; et/ou
le substrat d'insert (66) comprend un insert en bande (93) inséré dans une ouverture de bande (91), l'insert en bande (93) comprenant ou formant le au moins un élément de sécurité (72).

9. Feuille de sécurité (11) pour afficher des données personnelles comprenant un substrat en plastique (14) ayant des première et seconde surfaces extérieures (15, 16), dans laquelle :
le substrat en plastique (14) comprend au moins un élément de sécurité (72) noyé dans celui-ci et séparé des première et seconde surfaces extérieures (15, 16) ;
le substrat en plastique (14) est formé à partir d'une structure laminaire fusionnée, la structure laminaire comprenant une pluralité de couches en plastique (34, 35, 36, 38, 39, 40) dans lesquelles au moins une couche en plastique (34, 35, 36 , 39) comprend une ouverture (41) ayant un insert (61) situé en son sein et des couches en plastique (38, 40) recouvrent des surfaces extérieures opposées de l'insert (61) ; et
l'insert (61) comprend un substrat d'insert en plastique (66) et le au moins un élément de sécurité (72) situé dans et/ou sur le substrat d'insert (66), dans lequel le au moins un élément de sécurité (72) est détectable par un à l'œil nu et/ou par une machine et au moins le substrat d'insert (66) est fusionné à la pluralité de couches en plastique (34, 35, 36, 38, 39, 40), **caractérisée en ce que** l'insert (61) comprend un périmètre d'insert (84) qui s'apparie à la forme de l'ouverture (41) et le au moins un élément de sécurité (72) est calé sur le périmètre d'insert (84).

10. Feuille de sécurité (11) selon la revendication 9, dans laquelle :
le substrat en plastique (14) comprend une région opaque (17) formée dans la pluralité de couches en plastique (34, 35, 36, 39) adjacente à l'ouverture (41) ;
le au moins un élément de sécurité (72) définit un périmètre d'élément de sécurité (74) qui s'apparie au périmètre d'insert (84) et est plus petit que celui-ci ; et/ou
au moins une caractéristique de sécurité est située dans ou entre les couches en plastique (34, 35, 36, 38, 39, 40) et est agencé calé avec au moins un élément de sécurité (72) de l'insert (61).

11. Feuille de sécurité (11) selon la revendication 9 ou la revendication 10, dans laquelle l'insert (61) comprend un substrat d'insert au moins partiellement transparent (66) et le substrat en plastique (14) comprend au moins une fenêtre formée à partir d'au moins le substrat d'insert (66).

12. Feuille de sécurité (11) selon la revendication 11, dans laquelle le au moins un élément de sécurité (72) est calé sur au moins un périmètre de fenêtre.

13. Document de sécurité (10) comprenant la feuille de sécurité (11) selon l'une quelconque des revendications 9 à 12, dans lequel le au moins un élément de sécurité (72) et au moins une caractéristique de sécurité comprennent des données personnelles concernant le titulaire ; et/ou
dans lequel le document de sécurité (10) est un passeport, un document d'identification, une carte d'identité ou un permis de conduire.

14. Procédé de fabrication d'une pluralité d'inserts (61) à incorporer dans une feuille de sécurité en plastique (11), le procédé comprenant les étapes consistant à :
former une pluralité d'éléments de sécurité (72) dans ou sur un substrat en bande en plastique (102), la pluralité d'éléments de sécurité (72) pouvant être détectés à l'œil nu et/ou par une machine ;
découper le substrat en bande (102) en une pluralité d'inserts (61), chaque insert (61) comprenant au moins un élément de sécurité (72) et un substrat d'insert en plastique (66) pour insertion dans une ouverture (41) dans au moins un couche en plastique (34, 35, 36, 39) et pour fusion avec la au moins une couche en plastique (34, 35, 36, 39) pour former la feuille de sécurité en plastique (11), **caractérisé en ce que** le substrat d'insert (66) définit un périmètre d'insert (84) pour appariement à la forme de l'ouverture (41) et le au moins un élément de sécurité (72) est calé sur le périmètre d'insert (84).

15. Procédé selon la revendication 14, comprenant en outre l'étape de formation d'une pluralité d'éléments de calage (94) dans ou sur le substrat en bande (102), chaque élément de calage (94) étant calé avec au moins un élément de sécurité (72), dans lequel pendant l'étape de découpe, un outil de poinçonnage est calé sur l'élément de calage (94) pour former un substrat d'insert (66) ayant un périmètre d'insert (84) calé avec au moins un élément de sécurité (72).
